# EUROPEAN PATENT APPLICATION

(11) **EP 2 708 274 A1**
(43) Date of publication of application: **19.03.2014**
(21) Application number: 12781777.3
(22) Date of filing: 07.05.2012
(51) Int. Cl.: B01D 47/06, B01D 50/00, B01D 53/34, B01D 53/77, F01N 3/04

(54) **WET EXHAUST GAS PURIFICATION DEVICE**

(30) Priority: 11.05.2011 JP 2011106548
(71) Applicant: Kawasaki Jukogyo Kabushiki Kaisha, Kobe-shi, Hyogo 650-8670 (JP)
(72) Inventor: HOSONO, Takamichi, Akashi-shi, Hyogo 673-8666 (JP); YOSHIZAWA, Katsuhiro, Akashi-shi, Hyogo 673-8666 (JP); TAKATA, Hirotaka, Akashi-shi, Hyogo 673-8666 (JP); IWASAKI, Hidekazu, Akashi-shi, Hyogo 673-8666 (JP); NISHIMURA, Motohiko, Akashi-shi, Hyogo 673-8666 (JP); HIGASHIDA, Masanori, Kobe-shi, Hyogo 650-8670 (JP)
(74) Representative: Jenkins, Peter David
(86) International application number: PCT/JP2012/061669
(87) International publication number: WO 2012/153706

(57) **Abstract**

Provided is a wet exhaust gas purification device capable of removing deposited particulate matter from the demister and using demisters with an open ratio for collecting particulate matter efficiently. The device uses means for heating the demister to a temperature (60°C) at which the deposited oily particulate matter exhibits a lower viscosity or a temperature (600°C or more) at which the particulate matter burns spontaneously. This results in that the oily particulate matter as it is softened and liquified to the extent that it can drop under its own weight is easily washed away from the demister or the burned particulate matter residuals are washed away completely, which ensures to remove the particulate matter in a short period of time and with a minimum amount of cleaning water. The demister from which the particulate matter has been washed away can be renewed as new one.

## Description

### TECHNICAL FIELD

The present invention relates to a wet exhaust gas purification system. In particular, the present invention relates to a wet exhaust gas purification system which is capable of removing particulate matter such as unburned carbon or oil component discharged from a diesel engine.

### BACKGROUND OF THE INVENTION

The diesel engine employs a burning process in which a liquid fuel such as light oil or Bunker A is directly injected into a combustion chamber where it is vaporized and then diffused into and burned with surrounding air. This may cause an insufficient mixing of the fuel and the air, in particular, oxygen, which in turn generates dust called particulate matter. Typically, the diesel engine tends to cause nitrogen oxide NOx. A lowering of burning temperature indeed decreases the generation of NOx but, as a trade-off, increases an amount of emission of the particulate matter.

The particulate matter includes sulfur oxide generated by the reaction of sulfur content in fuel with oxygen, carbon soot caused by insufficient contact of the fuel with the combustion air, and soluble organic fraction SOF caused from the unburned fuel or lubricant oil remaining on the walls of combustion chamber. Those matters may cause significant malfunction of the respiratory system of human beings and therefore should be best considered in the purification of the exhaust gas from the diesel engine.

Conventionally, there have been proposed various exhaust gas purification systems for removing particulate matter from the exhaust gas to be processed. One of those exhaust gas purification systems is to provide a ceramic porous filter in a duct, such as diesel particulate filter DPE, for filtering the particulate matter, in which the filter is heated to burn out the filtered particulate matter of unburned carbon and/or oil. See, for example, the patent document 1.

Another is a wet exhaust gas purification system in which the particulate matter in the exhaust gas is collected by bringing the exhaust gas introduced into the system into contact with water mist sprayed from the nozzle and then the mixture of the gas and the mist is passed through a demister to remove the water, exhausting the purified gas into the atmosphere by using a vacuum blower.

### PRIOR ART DOCUMENTS

Patent Document 1: JP 2004-162626 A
Patent Document 2: JP 2006-231170 A
Patent Document 3: JUM 07-013420 A

The exhaust gas purification system disclosed in document 1 has a drawback that fine particulate matter with diameters less than several micrometers from the diesel engine are unable to be collected and a large amount of particulate matter flowing into the system can clog the filter.

The wet exhaust gas purification system disclosed in document 2 has a demister and a filter for collecting oil mist from the smoke exhausted from the kitchen. The oil adhered to the demister and filter is washed away by using washing liquid heated by a heater.

The wet exhaust gas purification system disclosed in document 3 uses a scrubber. The particulate matter adhered to the scrubber is washed away by using cleaning water supplied from the water pump. According to the system, the water is accumulated in the system and therefore there is no need to supply water from outside the system.

According to the conventional wet exhaust gas purification systems, processing the exhaust gas from the diesel engine may cause several problems. For example, the droplets are collected when the gas-liquid mixture passes through the demister; however, a part of particulate matter is separated from the droplets and remains on the demister. Also, typically the particulate matter included in the exhaust gas from the diesel engine has a very small diameter of several micrometers or less, so that a part of the particulate matter may flow with the gas flow without being caught by the spayed water mist and be caught by the demister.

An increase of the particulate matter caught by the demister decreases mesh openings through which air passes in the demister, which in turn decreases the velocity of air passing through the demister. This velocity decrease accelerates the deposition of the particulate matter and increases a pressure loss or difference of the gas between upstream and downstream sides of the demister, which needs a more powerful vacuum blower.

In addition, an increase of the deposition of the particulate matter in the demister causes clogging in the open areas of the mesh, which results in an insufficient vacuum supplied from the blower. The clogging problem occurs earlier in the demisters with elevated collection efficiency, i.e., with smaller open areas.

Therefore, the conventional wet exhaust gas purification system needs providing spray nozzles above and below the demister for spraying water mist against the mesh of the demister to wash off the particulate matter deposited in the demister. The deposition of the particulate matter includes unburned matters of the fuel and the lubricant oil with significantly high stickiness and low wettability against cleaning water.

The conventional water spraying cleaning method was incapable of cleaning the deposited particulate matter away from the demister completely. Also, the method may consume a fair amount of time and cleaning water.

The above described difficulties, such as incomplete cleaning of the deposited particulate matter from the demister, prohibit demisters with a lower open ratio or high collection efficiency from being used in the conventional wet exhaust gas purification system, which in turn means that it is difficult to provide an exhaust gas purification system with a high exhaust-gas cleaning efficiency.

In addition, the water sprayed against the entire area of the demister in the operation of the wet exhaust gas purification system may cause water film to clog the openings of the demister, increasing a pressure loss or pressure difference between upstream and downstream sides of the demister, which in turn requires that the spray zone of the demister should be changed during the operation. This, however, requires more water and time for cleaning, which adversely increases the clogging area of the demister and also the pressure loss or the pressure difference between the upstream and downstream sides of the demister in the cleaning.

Accordingly, the invention is to provide a wet exhaust gas purification system which is capable of easily cleaning the deposited particulate matter away from the demister, of using demisters with open ratio ensuring a higher particulate matter collecting efficiency, and of cleaning the exhaust gas efficiently.

Also, the invention is to provide a wet exhaust gas purification system capable of eliminating a significant pressure loss between the upstream and downstream sides of the demister.

### SUMMARY OF THE INVENTION

The wet exhaust gas purification system of the invention comprises
liquid receiving means for receiving a processing liquid;
gas-liquid contact means for bringing the processing liquid in the liquid receiving means with an exhaust gas from a combustion device to have the processing liquid collect dust contained in the exhaust gas; and
gas-liquid separation means provided on a downstream side of the gas-liquid contact means for separating a liquid from a processed exhaust gas including processing liquid having the particulate matter collected therein.
The wet exhaust gas purification system is characterized in that the wet gas exhaust gas purification device comprises heating means for heating the gas-liquid separation means.

According to the invention, the particulate matter deposited on the demister can easily be cleaned off and removed. This allows using a demister with an open ratio capable of collecting particulate matter efficiently, providing a wet exhaust gas purification device with increased purification efficiency.

Also provided is a wet exhaust gas purification system capable of avoiding an increased pressure difference between upstream and downstream sides of the demister which may cause at the cleaning of the demister in the operation of the wet exhaust gas purification system.

### BRIEF DESCRIPTION OF THE DRAWINGS

Fig. 1 a schematic diagram showing a wet exhaust gas purification system according to an embodiment of the invention;
Fig. 2 is a schematic diagram showing the wet gas purification system according to the embodiment of the invention;
Fig. 3 is a partial cross sectional view of a heating means or a portion A indicated in Fig. 2; and
Fig. 4 is diagram showing a modification of the heating means.

### PREFERRED EMBODIMENTS OF THE INVNETION

Referring to the accompanying drawings, a wet exhaust gas purification system (hereinafter referred to as "scrubber") according the embodiment of the invention will be described hereinafter. Although following descriptions will be made to a scrubber which is preferably used in removing particulate matter from the gas exhausted primarily from a combustion device of ship- and vehicle-installed diesel engine and land-based diesel engine, the present invention may also be applied to the scrubbers for removing particulate matter from the gas exhausted from, for example, the combustion device of industrial boiler and gasification furnace.

In the following descriptions, directional terminology such as "upper", "lower", etc., is used with reference to the orientation of the drawing(s) being described, it is used for purposes of better understanding of the invention and is in no way limiting the technical scope of the invention. It is to be understood that the following descriptions are related to one embodiment of the invention and do not intend to limit the scope or the application of the invention.

It is also be understood that the "liquid" referred in the gas-liquid separation includes not only liquid but also liquid including particulate matter. Also, in the following description a demister is used for the gas-liquid separation. It should be noted that the "demister" may be called as "mist separator" in the art.

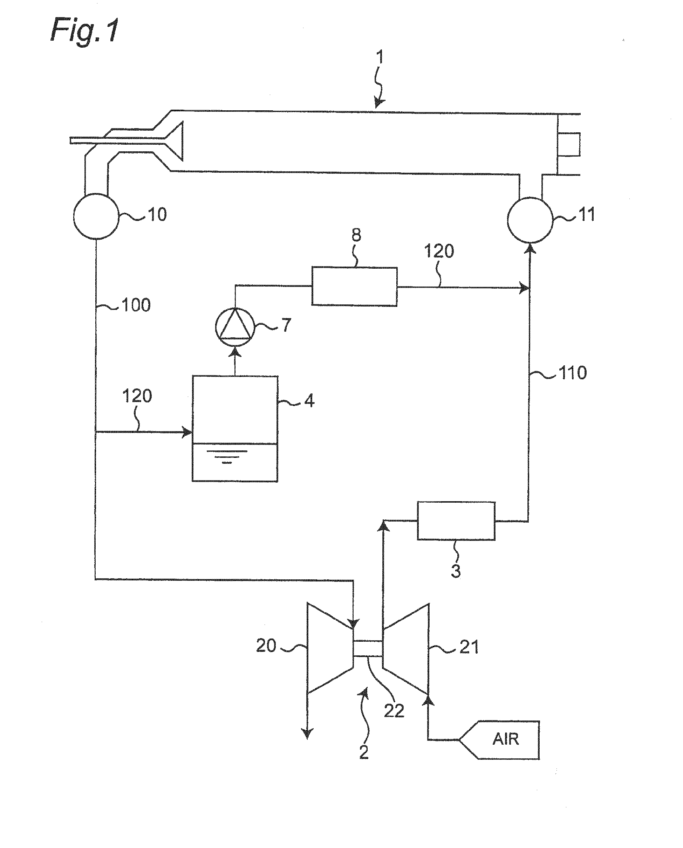

Referring to Fig. 1, a reference number 1 indicates a diesel engine, for example, two-stroke diesel engine for ship, in the embodiment of the invention. The diesel engine 1 comprises a water-cooling jacket mounted on a cylinder head or peripheral wall, in which water is transported for cooling the engine to a predetermined temperature.

The engine 1 has outlet and inlet tubes 10 and 11 which are connected to one ends of first and second passages 100 and 110, respectively. As shown, the diesel engine 1 comprises a supercharger 2. The supercharger 2 comprises a turbine rotor 20, a compressor impeller 21, and a shaft 22 extending therebetween. The turbine rotor 20 is connected to the other end of the first passage 100 (outlet of the engine) and the compressor impeller 21 is connected to the other end of the second passage 110 (inlet of the engine).

In operation, the exhaust gas from the diesel engine 1 is supplied to the turbine rotor 20 where heat energy of the exhaust gas is transformed into rotational energy which is transmitted from the turbine rotor 20 to the compressor impeller 21 connected therewith. The rotation of the compressor impeller 21 draws atmospheric air (i.e., oxygen containing fluid) therein and compresses the air. The compressed air is then cooled by an air cooler 3 and supplied into a combustion chamber of the diesel engine 1. As described above, the supercharger 2 increases an air filling rate of the combustion chamber, increasing the output power of the diesel engine 1.

In order to reduce the NOx generation of the diesel engine, the system further comprises an exhaust gas recirculation (EGR) technology which is designed to introduce a part of exhaust gas into the inlet of the engine. As shown in the drawing, the EGR equipped diesel engine 1 comprises a third passage 120 bypassing between the first and second passages 100 and 110. The third passage 120 comprises a scrubber 4 for collecting particulate matter and thereby purifying the exhaust gas by bringing the particulate matter in the exhaust gas from the diesel engine 1 into contact with a processing liquid, a vacuum blower 7 for vacuuming the gas purified by the scrubber 4, and a gas cooler 8 for cooling the purified gas, so that a part (e.g., 30%) of the exhaust gas from the diesel engine 1 is returned through the second passage 110 into the diesel engine 1. Also, SOx can be collected in the scrubber 4 by the contact between the exhaust gas and the processing liquid.

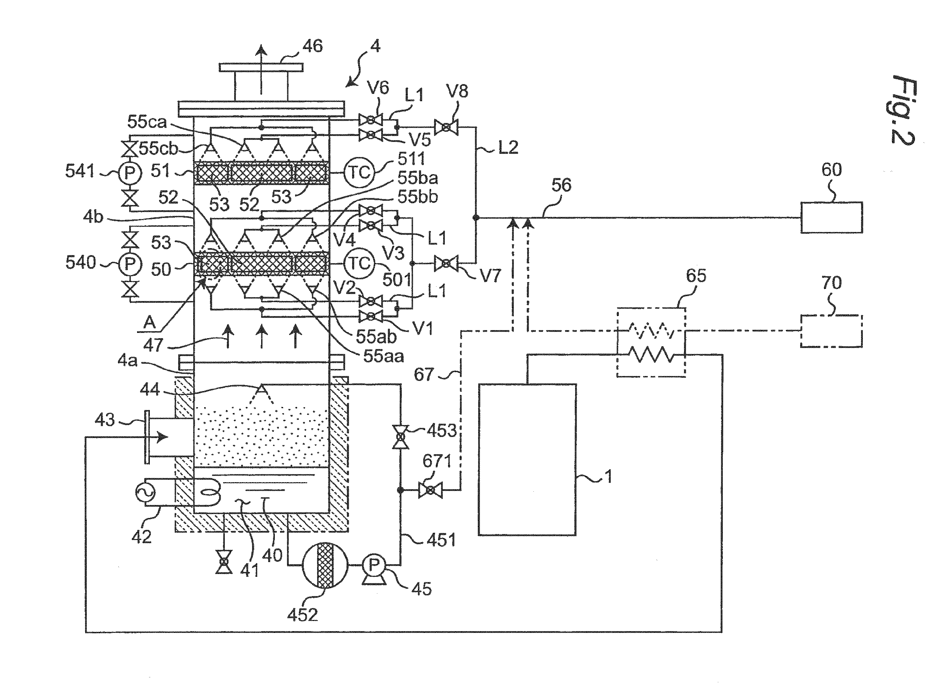

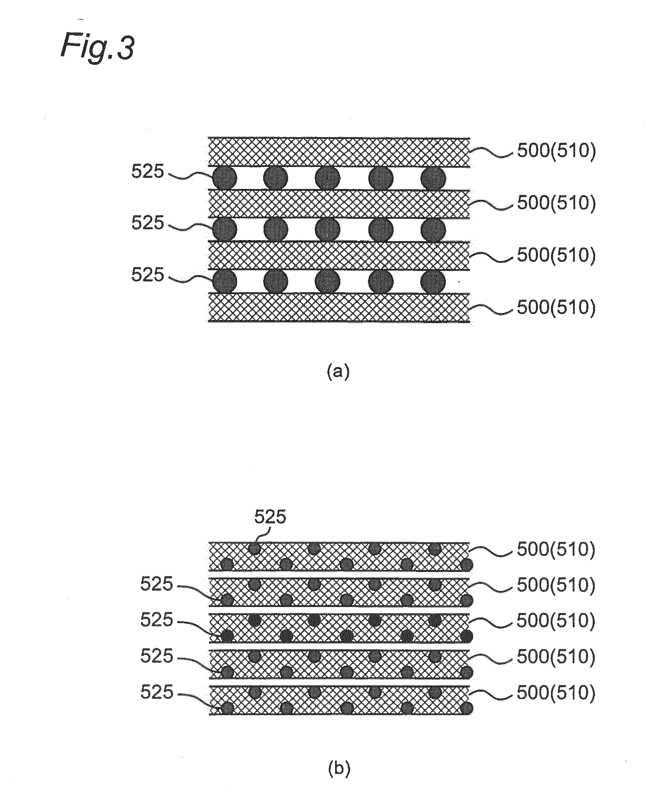

Referring next to Figs. 2 and 3, discussions will be made to the scrubber 4 according to the embodiment. The scrubber 4 comprises a vertical cylinder made of lower housing 4a and an upper housing 4b.

The lower housing 4a comprises a liquid reservoir 41 defined therewith for receiving a processing liquid 40. A heater 42 is provided at the reservoir 41 for heating the processing liquid 40 at a certain temperature and a glasswool insulation is provided around the lower housing 4a so that the processing liquid 40 is maintained at a certain temperature, e.g., 60 degrees Celsius.

An inlet tube 43 is extended through the wall of the lower housing 4a, above the reservoir 41, for introducing the exhaust gas from the diesel engine 1 into the interior of the scrubber 4.

A gas-liquid contact means or spray nozzle 44 is provided in the interior of the scrubber 4 and above the liquid reservoir 41 for spraying the processing liquid 40 downwardly toward the exhaust gas introduced in the interior of the scrubber 4. A circulation passage 451 with a circulation pump 45 is connected between the reservoir 41 and the spray nozzle 44 for transporting the processing liquid 40 from the reservoir 41 to the spray nozzle 44, forming a circulation pass in which the processing liquid 40 sprayed from the spray nozzle 44 is collected at the reservoir 41 and then transported through the circulation passage 451 to the spray nozzle 44 for the subsequent spraying thereof. As shown in the drawing, a filter 452 may be provided to collect impurities from the processing liquid 40 being transported toward the spray nozzle 44. Also, a valve 453 may be provided in the passage to adjust an amount of processing liquid 40 to be sprayed from the spray nozzle 44 by controlling an open ratio of the valve 453.

Although the processing liquid 40 is sprayed from the spray nozzle 44 in the form of mist droplets in order to contact with the exhaust gas, it may be mixed with the gas by bubbling the gas in the processing liquid in the reservoir to form a gas-liquid mixture including mist droplets which would be brought into contact with the exhaust gas.

An outlet tube for exhausting the purified gas from the scrubber 4 is connected at the top portion of the upper housing 4b.

The upper housing 4b accommodates two gas-liquid separation means or demisters in a gas flow passage 47 formed in the interior of the upper housing. Specifically, first and second demisters 50 and 51 are located on the upstream and downstream sides with respect to the upward gas flow. The upstream and downstream demisters 50 and 51 are spaced a certain distance away from each other. The number of the demisters is not restrictive and a suitable number of demisters may be provided according to an amount of gas to be processed and/or the characteristics of the gas.

The demisters 50 and 51 are each made of a plurality of disk-like members. For example, wave plate demister elements each made by weaving flexible metal wires are used, which are stacked one on top the other with their waves crossing each other. This ensures that each of the demisters 50 and 51 can collect the mist droplets from the gas-liquid mixture fed from the lower housing 4a as the mixture passes though the demisters.

The open ratio of the first demister 50 may be the same as that of the second demister 51. Considering the fact that the upstream demister 50 is more likely to be clogged, preferably the first demister 50 has an open ratio greater than the second demister 51. The open ratio of the demister corresponds to a coarseness of wiring and the open ratio increases with the coarseness.

As shown in Fig. 2, each demister comprises heating means or heating device incorporated thereinside for heating the demisters 50 and 51. The heating device may be a resistive heater such as sheathed heater. The heating device has internal and external heaters 52 and 53 separated from each other for heating central and peripheral portions of the demister, respectively. The internal and external heaters 52 and 53 are electrically connected to a power circuit not shown so that outputs of the power circuit for respective heaters 52 and 53 are controlled by control means not shown in response to temperature signals from thermocouples 501 and 511, respectively. The control means uses a first preset temperature at which the oily particulate matter deposited in the demisters 50, 51 has a lower viscosity and a second preset temperature at which the oily particulate matter fires spontaneously. For example, in the embodiment the first preset temperature is 60 degrees Celsius and the second preset temperature is 600 degrees Celsius or more. Either the first or the second preset temperature is used selectively.

For example, as shown in Fig. 3A the internal and external heating members 52 and 53 may be provided in the demisters 50 and 51 by positioning the heater wires 525 between the neighborhood circular members 500 and 510 of the demister 50 and 51. Alternatively, as shown in Fig. 3B, the heater wires 525 may be woven into the circular member 500 and 510 of the demisters 50 and 51.

Although in the embodiment the heating device in the demisters 50 and 51 are divided into internal and external heaters 52 and 53 for heating central and peripheral areas of the demisters 50 and 51, respectively, this is not restrictive to the invention. For example, each demister may be divided into more than two or may be provided with a single heater.

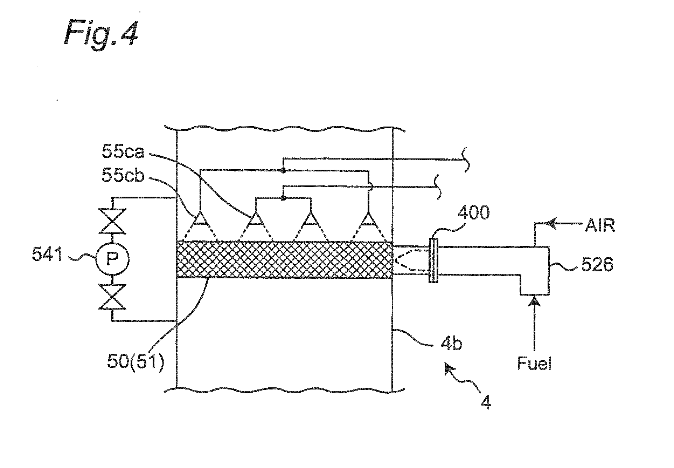

Although in the embodiment the heating means is made of electric resistive heater incorporated in the demister, this is not restrictive to the invention. Instead, the demister may be heated by using a gas burner or oil burner. For example, as shown in Fig. 4, a gas or oil burner 526 may be mounted at a portion of the peripheral wall of the upper housing 4b, adjacent the demister, through a burner mounting flange 400 to heat the demister from its side. In this embodiment, a combustion control device not shown is preferably provided to control the burning capacity of the burner 526. According to the arrangement of the heating means, when the first preset temperature is selected, the viscosity of the oily particulate matter deposited in the demister will be decreased and, when the second preset temperature is selected, the oily particulate matter will be burn out.

Referring back to Fig. 2, the peripheral wall of the upper housing 4b supports pressure gauges 540 and 541 for measuring pressure losses between the upstream and the downstream sides of respective demisters to detect clogging of the demisters 50 and 51, respectively.

Positioned adjacent the demisters 50 and 51 are spray nozzles for cleaning (cleaning means). Specifically, two cleaning-liquid spray nozzles 55aa are provided on the upstream side of the demister 50 for spraying cleaning liquid upwardly toward the central region of the demister 50 and two cleaning-liquid spray nozzles 55ab are provided on the upstream side of the demister 50 for spraying the cleaning liquid upwardly toward the peripheral region of the demister 50. Also, two cleaning-liquid spray nozzles 55ba are provided on the downstream side of the demister 50 for spraying the cleaning liquid downwardly toward the central region of the demister and two cleaning-liquid spray nozzles 55bb are provided on the downstream side of the demister 50 for spraying the cleaning liquid downwardly toward the peripheral region of the demister.

Further, two cleaning-liquid spray nozzles 55ca are provided on the downstream side of the demister 51 for spraying the cleaning liquid downwardly toward the central region of the demister and two cleaning-liquid spray nozzles 55cb are provided on the downstream side of the demister 51 for spraying the cleaning liquid downwardly toward the peripheral region of the demister.

The cleaning-liquid spray nozzles 55aa and 55ba are connected to respective branched passages L1 with valves V1 and V2. Open ratios of the valves V1 and V2 can be controlled independently so that both spray nozzles 55aa and 55an can spray the cleaning liquid simultaneously or either one of two spray nozzles 55aa and 55ba can spray the cleaning liquid selectively. Valves V3 and V4 are provided at the branched passages L1 connected to the cleaning liquid spray nozzles 55ba and 55bb so that both or either one of two nozzles 55ba and 55bb can spray the cleaning liquid simultaneously or selectively.

Likewise, valves V5 and V6 are provided at the branched passages L1 connected to the cleaning liquid spray nozzles 55ca and 55cb so that both or either one of two nozzles 55ca and 55cb can spray the cleaning liquid simultaneously or selectively.

The branched passages L1 for the first and second demisters are connected through another branched passages L2 with valves V7 and V8, respectively, and a heated water supply passage 56 to a cleaning liquid heating means or water heater 60. The water heater 60 is designed so that it supplies heated water at a temperature of, for example, 60 degrees Celsius, allowing the cleaning liquid spray nozzles 55aa, 55ab, 55ba, 55bb, 55ca, and 55cb to spray heated cleaning liquid.

According to the embodiment, the oily particulate matter deposited in the demisters are heated by the heaters 52 and 53 at first or second temperature to be softened or burned, respectively, and then the softened or burned particulate matter (residuals) is completely washed away from the demister by the heated cleaning liquid. It should be understood that above-described embodiment is not restrictive to the invention and the residuals may be washed away by using water at normal temperature.

The number of the spray nozzles may be determined according to an amount of gas to be processed by the scrubber 4, sizes of the scrubber 4 and demisters 50 and 51, and cleaning areas or ranges required.

Although in the previous embodiment the cleaning liquid to be supplied to the cleaning liquid spray nozzles 55aa, 55ab, 55ba, 55bb, 55ca, and 55cb is heated by the water heater 60, it may be heated by exchanging heat with other heat medium. For example, as shown in Fig. 2, a heat exchanger 65 is provided to collect sensible heat from the exhausted gas from the diesel engine 1. According to the embodiment, the cleaning liquid at a normal temperature is transported from the cleaning liquid supply source 70 through the heat exchanger 65 where it is heated up to about 60 degrees Celsius by the used of collected heat. The heated water is then supplied to the cleaning liquid spray nozzles 55aa, 55ab, 55ba, 55bb, 55ca, and 55cb. In this instance, instead of using the heat exchanger 65 for collecting sensible heat of the exhaust gas from the diesel engine, another heat exchanger may be used for collecting sensible heat of the cooling water from the diesel engine, at a temperature of about 80-90 degrees Celsius.

As shown in Fig. 2, a passage 67 with a valve 671 may be connected between the circulation passage 451 and the heated water supply passage 56 so that the processing liquid 40 in the reservoir 41 at a temperature of about 60 degrees Celsius is supplied to the 55aa, 55ab, 55ba, 55bb, 55ca, and 55cb.

Referring to Figs. 1 and 2, operations of the scrubber 4 so constructed will be described. Referring now to Fig. 1, the driving diesel engine 1 in operation discharges the exhaust combustion gas. The exhaust gas is delivered from the exhaust tube 10 through the first passage 100 into the supercharger 2.

In the supercharger 2, the heat energy of the exhaust gas is transformed into rotational energy, causing the rotations of the turbine rotor 20 and the compressor impeller 21 connected to the turbine rotor 20 to draw atmospheric air (containing oxygen). The air compressed by the compressor impeller 21 is then cooled by the air cooler 3 and then supplied to the combustion chamber of the diesel engine 1. The exhaust gas from the supercharger 2 is discharged into the air through a muffler not shown.

A part of the exhaust gas from the diesel engine 1 (e.g., 30% of the total exhaust gas) is supplied through the third passage 120 into the scrubber 4. The scrubber 4 removes the particulate matter contained in the exhaust gas by bringing the cleaning liquid into contact with the exhaust gas. The processing of the exhaust gas at the scrubber 4 will be described later with reference to Fig. 2. The exhaust gas from which the particulate matter has been removed is exhausted by the vacuum generated by the vacuum blower 7, then cooled down to a certain temperature by the gas cooler 8, and returned through the second passage 110 into the diesel engine 1.

As shown in Fig. 2, the exhaust gas introduced in the interior of the scrubber 4 moves upwardly while making contact with the mist droplets of the processing liquid 40 (at a temperature of about 60 degrees Celsius) sprayed downwardly from the spray nozzles 44, allowing the processing liquid 40 to catch the particulate matter contained in the exhaust gas. Then, the mixture of the gas and the mist droplets of the processing liquid 40 is supplied through the gas flow passage 47 into the gas-liquid separating means or demisters 50 and 51. The gas and the mist droplets are separated from each other as they pass through the demisters 50 and 51 and then the collected droplets are returned to the reservoir 41 in the lower housing 4a. The gas processed when passing through the demisters 50 and 51 is then discharged by the vacuum blower not shown.

As described in the BACKGROUND OF THE INVENTION, when the mixture of the gas and the liquid of mist droplets passes through the demisters 50 and 51, the liquid are caught and separated by the demisters 50 and 51. A large part of the liquid caught by the demisters 50 and 51 drops from the demisters; however, a small part remains on the demisters 50 and 51 together with particulate matter included therein. The particulate matter included in the exhaust gas from diesel engine consists of tiny particles of less than several micrometers in diameter, which results in that a part of the particulate matter rides on the gas flow and passes through the sprayed mist to reach the demisters where it can be caught by the demisters.

The particulate matter caught by the demisters gradually decreases the openings with time, decreasing the velocity of the gas flow passing the demisters, which in turn accelerates the deposition of the particulate matter on the demisters and thereby increases a pressure loss or pressure difference between the upstream and downstream sides of the demisters and a resultant load increase in the vacuum blower decreases a gas purification efficiency of the scrubber 4.

In order to prevent the scrubber from being inoperable due to the clogging of the demisters, a pressure difference between the upstream and downstream sides of each demister is preferably monitored using outputs from the pressure sensors 540 and 541, continuously or at regular time intervals during the operation of the scrubber 4.

In this operation, an output which is more than a predetermined value exhibits a high likelihood of clogging in the corresponding demister. If the clogging occurs at the demister 50, the water heater 60 is activated. Next, the internal heater 52 is energized to heat the central region of the demister 50. If the first preset temperature is selected for the internal heater 52, the particulate matter deposited on the central region of the demister 50 is heated with the temperature increase of the internal heater and thereby softened to reduce its viscosity, dropping from the demister. If the second preset temperature is selected for the internal heater 52, the particulate matter deposited on the central region of the demister 50 is burn out. The burned residuals remain at the central region of the demister.

Then, the valve V7 on the branch passage L2 is opened and also the valves V2 and V3 on the branch passages L1 connected to the spray nozzles 55aa and 55ba are opened, allowing the heated cleaning liquid at a temperature of about 60 degrees Celsius to be sprayed against the central region of the demister 50 from its upstream and downstream sides. If the first preset temperature is selected from the internal heater 52, the oily particulate matter as it is softened and liquified to the extent that it can drop under its own weight is easily washed away from the demister. If the second preset temperature is selected for the internal heater 52, the oily particulate matter is burn out. The burned residuals on the central region of the demister 50 are easily washed away instantly and with a minimum cleaning liquid.

As described above, the deposited particulate matter can be removed with a minimum amount of cleaning liquid in either condition where the central region of the demister 50 is heated at the first or second preset temperature, preventing a generation of water film which would otherwise clog the openings of the demisters, which in turn reduces the pressure difference (pressure loss) between the upstream and downstream region of the demister.

When the oily particulate matter deposited on the central region of the demister 50 is completely removed, the internal heater 52 is disconnected from the power source and then the valve V7 in the branch passage L2 and the valves V2 and V3 in the branch passages L1 are closed to cut off cleaning-liquid supply to the spray nozzles 55aa and 55ba.

Then, the peripheral heater 53 is turned on for heating the peripheral region of the demister 50. If the first preset temperature is selected for the peripheral heater 53, the oily particulate matter in the peripheral region of the demister as it is softened and liquified to the extent that it can drop under its own weight is easily washed away from the demister. If the second preset temperature is selected for the external heater 53, the oily particulate matter is burn out and the burned residuals remain at the peripheral region of the demister 50.

Then, the valve V7 on the branch passage L2 is opened and also the valves V1 and V4 on the branch passages L1 connected to the spray nozzles 55ab and 55bb are opened, allowing the heated cleaning liquid at a temperature of about 60 degrees Celsius to be sprayed against the peripheral region of the demister 50 from its upstream and downstream sides. As described in the cleaning of the internal regions, if the first preset temperature is selected from the external heater 53, the oily particulate matter as it is softened and liquified to the extent that it can drop under its own weight is easily washed away from the demister. If the second preset temperature is selected for the external heater 53, the oily particulate matter is burn out. The burned residuals on the external region of the demister 50 are easily washed away instantly and with a minimum cleaning liquid.

As described above, the deposited particulate matter can be removed with a minimum amount of cleaning liquid in either condition where the central region of the demister 50 is heated at the first or second preset temperature, preventing a generation of water film which would otherwise clog the openings of the demisters, which in turn reduces the pressure difference (pressure loss) between the upstream and downstream region of the demister. When the oily particulate matter deposited on the central region of the demister 50 is completely removed, the external heater 53 is disconnected from the power source and then the valve V7 in the branch passage L2 and the valves V1 and V4 in the branch passages L1 are closed to cut off cleaning-liquid supply to the spray nozzles 55ab and 55bb.

Because the oily particulate matter deposited on the demister 51 is also washed away or removed in the same manner as described above, no description will be made to that.

The measurement of the pressure difference between the upstream and downstream sides of each demister, the determination whether the demister is clogged or not, or the spraying the heated cleaning liquid may be conducted manually by operators. Also, the switching operations of the heaters and the spraying operations of the heated cleaning liquid may be made after the determination of the clogging by using pressure measurements at the controller.

The upward and downward spraying of the cleaning liquid from the spray nozzles 55aa, 55ab, 55ba, 55bb, 55ca, and 55cb against the demisters may or may not be made simultaneously or may be temporally-overlapped or temporally-shifted. Also, the cleaning liquid may be sprayed continuously or intermittently.

As described above, according to the exemplary scrubber 4 the oily particulate matter deposited in the demister is heated up to its spontaneous-firing temperature (600 degrees Celsius or more) by the heating means and thereby is burned out, allowing that the heated or non-heated cleaning liquid is sprayed efficiently against the residuals, which minimizes the cleaning time and the amount of cleaning liquid. The minimized amount of cleaning liquid prevents any generation of water film closing the openings of the demister, which in turn decreasing the pressure difference between the upstream and downstream sides of the demister. The demister from which the particulate matter has been washed away can be renewed as new one.

The renewed demister can be used as the new one, which ensures to avoid unwanted increase of the pressure difference between the upstream and downstream sides, increase of resultant load on the vacuum blower, and decrease in vacuum generated by the vacuum blower. Also, even when a part of the exhaust gas from the diesel engine is returned into the diesel engine, a necessary circulation volume of exhaust gas can be obtained.

Although the conventional demisters with smaller open ratio, i.e., with elevated collection efficiency, tend to become inoperable in a short period of time due to its clogging, the oily particulate matter can be cleaned and removed easily from the exemplary demisters according to the invention, ensuring that demisters with smaller opening ratio, i.e., with elevated collection efficiency are used, which increases a capability of collecting particulate matter. This increase of capability in turn significantly decreases particulate matter transported into the vacuum blower 7, gas cooler 8, and diesel engine 1 provided on the downstream side of the scrubber 4. As a result, the maintenance operations of those installations become less time consuming and life-spans of those installations are extended.

The above described embodiments are exemplary and not intended to be restrictive to the invention. The present invention includes not only the disclosed embodiments but also any modifications and improvements which fall within the scope of the claims and their equivalents.

### PARTS LIST

1: diesel engine
2: surpercharger
3: air cooler
4: scrubber
4a: lower housing
4b: upper housing
7: vacuum blower
8: gas cooler
40: processing liquid
41: reservoir
44: spray nozzle
47: gas flow passage
50, 51: demister
52: internal heater
53: external heater
55aa, 55ab, 55ba, 55bb: liquid spray nozzle
55ca, 55cb: cleaning spray nozzle
526: burner

## Claims

1. A wet exhaust gas purification device, comprising:
liquid receiving means for receiving a processing liquid;
gas-liquid contact means for bringing the processing liquid in the liquid receiving means with an exhaust gas from a combustion device to have the processing liquid collect dust contained in the exhaust gas; and
gas-liquid separation means provided on a downstream side of the gas-liquid contact means for separating a liquid from a processed exhaust gas including processing liquid having the particulate matter collected therein;
**characterized in that**
the wet gas exhaust gas purification device comprises
heating means for heating the gas-liquid separation means.

2. The device of claim 1 further comprising washing means for spraying a cleaning liquid against the gas-liquid separation means to wash the particulate matter deposited on the gas-liquid separation means.

3. The device of claim 1 or 2,
wherein the heating means is so positioned that it heats at least two predetermined regions of the gas-liquid separating means independently, and
wherein the washing means sprays a washing liquid against the regions of the gas-liquid separating means after the regions has been heated by the heating means.

4. The device in any one of claims 1-3, wherein the heating means is an electric resistance heater or a burner for burning a mixture of fuel and air.

5. The device in any one of claims 1-4, wherein
the combustion device is a diesel engine, and
the dust contained in the exhaust gas from the diesel engine is a particulate matter.
